# EUROPÄISCHE PATENTSCHRIFT

(11) **EP 3 798 380 B1**
(45) Veröffentlichungstag und Bekanntmachung des Hinweises auf die Patenterteilung: **16.02.2022**
(21) Anmeldenummer: 20190740.9
(22) Anmeldetag: 12.08.2020
(51) Int. Cl.: E04C 1/39

(54) **BETONELEMENT UND VERFAHREN ZU DESSEN HERSTELLUNG**
CONCRETE ELEMENT AND METHOD OF MANUFACTURING SAME
ÉLÉMENT EN BÉTON ET SON PROCÉDÉ DE FABRICATION

(30) Priorität: 26.09.2019 DE 102019126011
(43) Veröffentlichungstag der Anmeldung: 31.03.2021
(73) Patentinhaber: Universität Kassel, 34125 Kassel (DE)
(72) Erfinder: Polster, Roman, 34119 Kassel (DE); Büscher, Lucas, 34131 Kassel (DE); Klussmann, Heike, 10178 Berlin (DE); Riehl, Wigbert, 34117 Kassel (DE)
(74) Vertreter: Schneider, Peter Christian

(56) Entgegenhaltungen:
- AT-A2- 505 253
- DE-A1- 2 738 171
- DE-A1- 3 222 781
- FR-A1- 2 747 265

## Beschreibung

### Gebiet der Erfindung

Die Erfindung betrifft ein Betonelement, umfassend eine mit Zuschlagstoffen versetzte Zementmatrix mit reliefartig strukturierter Sichtfläche, auf der oberflächennah und mit Umgebungskontakt ein eine Anwachsung von Kryptogamen, insbesondere Moosen, beförderndes Wachstumssubstrat gehaltert ist.

Die Erfindung bezieht sich weiter auf ein Verfahren zum Herstellen eines Betonelementes umfassend die Schritte:
a) Bereitstellen einer Schalung zur Vorgabe der Außenform des Betonelementes,
b) Auskleiden der Schalung mit einer Matrize an der der späteren Sichtfläche des Betonelementes entsprechenden Schalungswand zur Vorgabe einer reliefartigen Struktur der Sichtfläche,
c) Füllen der Schalung mit einer gießfähigen Mischung aus Zement und Zuschlagsstoffen,
d) Erhärten-Lassen des Zementes, Ausschalen des resultierenden Grünlings und Abziehen der Matrize.

### Stand der Technik

Die Luftemission durch Kohlenstoffdioxid, Stickstoffdioxid und Feinstaub belastet Stadtbewohner zunehmend und die von der Weltgesundheitsorganisation empfohlenen Werte werden teilweise deutlich überschritten. Gleichzeitig steigen der Flächenverbrauch und die damit einhergehende Flächenversiegelung stetig an, was erhebliche negative Auswirkungen auf das Stadtklima haben kann. Ein Ansatz zur Verbesserung dieser Situation ist die Intensivierung der sogenannten vertikalen Begrünung, d.h. der Ansiedlung von Pflanzen an Mauern und Gebäudefassaden. Dieser Ansatz stößt allerdings auf verschiedene praktische Probleme. Der typische Werkstoff für Mauern und Fassaden ist Beton, d.h. eine mit Zuschlagstoffen versetzte Zementmatrix. Obgleich durch gezielte, dem Fachmann grundsätzlich bekannte Auswahl von Ausgangsstoffen die Chemie ihrer jeweils resultierenden Betonelemente in weiten Grenzen einstellbar ist, besteht das grundsätzliche Problem, dass die meisten Betonarten ein mit dem Wachstum der meisten Pflanzen unverträgliches, alkalisches Milieu bieten. Die Wahl von Spezial-Betonarten mit niedrigem pH-Wert ist in vielen Fällen aus Gründen der zu erzielenden Baustatik nicht möglich. Zudem kann ein zu pflanzenfreundliches Milieu, welches eine Durchwurzelung des gesamten Betonelementes erlaubt, auf Dauer zu erhöhter Brüchigkeit bis hin zur Zerstörung der Gesamtkonstruktion führen.

Der Begriff des Betonelementes ist im vorliegenden Kontext weit zu verstehen und umfasst sowohl vergleichsweise kleine Stücke, die im Betonwerk auf Vorrat gefertigt und zur Baustelle transportiert werden (Transportbeton), als auch um größere Strukturen, die unmittelbar vor Ort gegossen werden (Ortbeton).

Aus der DE 27 38 171 A1 ist es bekannt, Betonelemente an ihrer Sichtfläche mit nach außen offenen Einbuchtungen zu versehen, die nachträglich mit einem die Anwachsung von Pflanzen ermöglichendem Wachstumssubstrat, wie beispielsweise Torf, Erde etc., gefüllt werden. Solche Einbuchtungen lassen sich durch die Verwendung von Matrizen, mit welchen die Innenwandungen der Schalung bei der Herstellung der Betonelemente ausgekleidet werden, erzielen. Dieser Ansatz zeigt jedoch verschiedene Nachteile. Zum einen ist die Platzierung von "Löchern" in der Sichtfläche von Mauern oder Fassaden aus gestalterischen Gründen nicht immer erwünscht. Zudem bieten die Taschen Angriffspunkte für die Stabilität des Betonelementes schädigende Witterungseinflüsse, beispielsweise für Frostsprengungen. Sodann ist auch der Arbeitsaufwand, der mit dem Befüllen der einzelnen Taschen mit Wachstumssubstrat verbunden ist, insbesondere bei großen, hohen Gebäudestrukturen, nicht mit dem üblicherweise verfolgten Ziel der Wirtschaftlichkeit verbindbar. DE 32 22 781 A beschreibt ein Betonelement mit den Merkmalen des Oberbegriffs des Anspruchs 1.

### Aufgabenstellung

Es ist die Aufgabe der vorliegenden Erfindung, ein Betonelement und ein Verfahren zu dessen Herstellung zur Verfügung zu stellen, welches auf wirtschaftliche Weise eine Begrünung der Sichtfläche ohne Schädigung der für die Gebäudestabilität wesentlichen Struktur des Bauelementes erlaubt.

### Darlegung der Erfindung

Diese Aufgabe wird in Verbindung mit den Merkmalen des Oberbegriffs von Anspruch 1 dadurch gelöst, dass das Wachstumssubstrat als eine gekörnte, d.h. im Wesentlichen aus Körnern bestehende, formschlüssig, insbesondere korn- oder kornclusterweise formschlüssig in der Oberfläche der Zementmatrix fixierte Beschichtung ausgebildet ist.

Im Hinblick auf das zugrundeliegende Herstellungsverfahren wird die Aufgabe in Verbindung mit den Merkmalen des Oberbegriffs von Anspruch 8 dadurch gelöst, dass vor Schritt c Körner eines Wachstumssubstrates mittels eines Adhäsives bereichsweise innenseitig auf der Matrize temporär fixiert und in Schritt c von dem Zement umflossen werden, sodass in Schritt d die von dem erhärteten Zement oberflächennah, formschlüssig fixierten Wachstumssubstrat-Körner beim Abziehen der Matrize von dieser gelöst werden.

Bevorzugte Ausführungsformen sind Gegenstand der abhängigen Ansprüche.

Die Grundidee der vorliegenden Erfindung besteht darin, bereits bei der Herstellung des Betonelementes, das für das Pflanzenwachstum erforderliche Wachstumssubstrat in das Element einzuarbeiten und zwar ausschließlich an dessen Oberfläche. Dort wird höchst lokal, nämlich in bzw. an den Körner des Wachstumssubstrats ein Mikromilieu geschaffen, welches unmittelbar an der Oberfläche des Betonelementes ein Pflanzenwachstum, insbesondere ein Wachstum von Moosen und/oder Flechten ermöglicht und befördert. Tieferliegende Strukturen des Betonelementes bleiben gegenüber herkömmlichen Betonelementen unverändert und können in üblicher Weise auf die Anforderungen des jeweiligen Gebäudes, insbesondere im Hinblick auf dessen Stabilität und Bauchemie, hin optimiert werden.

Das zur Herstellung erfindungsgemäße Betonelemente vorzugsweise verwendete Verfahren unterscheidet sich wesentlich von üblichen Herstellungsverfahren, bei denen Beton in hier als Schalung bezeichnete Formen gegossen wird. Mit der Schalung wird die grobe äußere Form des Betonelementes definiert.

Dem Fachmann ist es bekannt, reliefartige Feinstrukturen der Sichtfläche nicht in der eigentlichen Schalung, sondern in einer sogenannten Matrize mit entsprechenden Negativformen zu modellieren und die Matrize an der der späteren Sichtfläche des Betonelementes entsprechenden Schalungswand einzulegen. Die Matrize kann bspw. aus Latex, Silikon, Polysterol, Hart-PVC oder ähnlichen, wasserdichten Materialien bestehen. Sie enthält in Negativform die auf der Sichtfläche auszuprägenden Strukturen, auf deren vorteilhafte Ausgestaltung weiter unten noch näher eingegangen werden soll. Nach dem Erhärten kann die Matrize abgezogen werden, wobei die verbleibende Oberfläche des Betonelementes die entsprechende Reliefstruktur zeigt.

Im Rahmen der vorliegenden Erfindung dient die Matrize jedoch nicht lediglich der Formvorgabe, sondern auch als temporärer Träger der Wachstumssubstrat-Körner, auf deren vorteilhafte Beschaffenheit weiter unten noch näher eingegangen werden soll. Diese werden mittels eines Adhäsives, beispielsweise eines Harzes, Acrylates oder eines sog. Waschlacks, an den gewünschten Positionen der Matrize aufgeklebt. Bspw. kann dies erfolgen, indem die Matrize an den erforderlichen Stellen mit dem Adhäsiv benetzt und sodann mit dem Wachstumssubstrat bestreut wird. Dabei sollten die Wachstumssubstratkörner nicht in eine "dicke" Adhäsivschicht eingebettet werden. Vielmehr sollte die Adhäsivschicht dünn, insbesondere mit im Vergleich zum Durchmesser der Wachstumssubstrat-Körner vernachlässigbarer Schichtdicke ausgebildet sein. Überschüssiges Wachstumssubstrat kann abgeblasen und die Matrize sodann in die Schalung eingelegt werden. Selbstverständlich ist auch eine Beschichtung der Matrize im bereits in die Schalung eingelegten Zustand möglich, wenngleich nicht bevorzugt.

Beim Füllen der Schalung mit dem noch gießfähigen Beton werden die Wachstumssubstrat-Körner, soweit sie aus dem dünnschichtigen Adhäsiv herausragen, von dem flüssigen Zement umflossen. Nach dem Erhärten des Zementes sind die Wachstumssubstrat-Körner daher einerseits materialschlüssig mit der Matrize und andererseits formschlüssig mit der erhärteten Zementmatrix verbunden. Letztere Verbindung ist deutlich stärker als erstere. Beim Abziehen der Matrix nach dem Ausschalen reißen die Körner daher von der Matrix ab und verbleiben als formschlüssig fixierte Oberflächenbeschichtung des Betonelementes an diesem zurück. Ggf. kann die so beschichtete Sichtfläche des Betonelementes zur weiteren Freilegung der äußeren Bereiche der fixierten Wachstumssubtrat-Körner nachbehandelt werden, bspw. durch Hochdruckreinigung und/oder Ansäuern. Die Freilegung darf selbstverständlich, wie der Fachmann ohne weiteres erkennt, nicht so weitgehend sein, dass der Formschluss zwischen den Körnern und der Zementmatrix aufgehoben würde.

Bei einer besonders bevorzugten Ausführungsform der Erfindung weist das Adhäsiv eine Substanz auf, die in ihrem Kontaktbereich zu dem Zement dessen Erhärten verzögert. Beispielsweise kann ein sog. Waschlack als Adhäsiv oder als Bestandteil des Adhäsives verwendet werden. Auch die Beimischung z.B. von Zucker zu herkömmlichen Klebstoffen kann diese Wirkung herbeiführen. Durch den Verzögerer wird die zuvor beschriebene Nachbehandlung erleichtert. Insbesondere kann die oberste, nicht erhärtete Zementschicht, durch einfaches Waschen mit Wasser abgetragen und die Wachstumssubstrat-Körner dadurch stärker freigelegt werden. Auch hier gilt selbstverständlich, dass die Verzögerung der Zementerhärtung nicht so tief in die Zementmatrix reichen darf, dass der erfindungswesentliche Formschluss aufgehoben wird. Dies ist jedoch bei der bevorzugten Körnung der Wachstumssubstrat-Körner von bis zu sechs Millimeter Korndurchmesser für den Fachmann leicht zu bewerkstelligen.

Bei den Wachstumssubstrat-Körnern handelt es sich vorzugsweise um Körner aus offenporigem Gestein, wie bspw. Lava, Bims, Zeolith, Blähton, etc. Alternativ oder zusätzlich können Wachstumssubstrat-Körner aus Netzstruktur-Elementen Einsatz finden, die von einer erhärteten, mineralischen Schlämme getränkt sind. Solche Netzstrukturelemente sind dem Fachmann bspw. als Schaumträger, Textil- oder Kunststoff- (einschließlich Carbon) Gitter, etc. bekannt. In jedem Fall bilden die Wachstumssubstrat-Körner eine Struktur, die aufgrund ihrer Porosität eine gute Anhaftung von Moosen und Flechten ermöglicht und zugleich das zum Pflanzenwachstum notwendige bzw. das Pflanzenwachstum befördernde Mikromilieu bereitstellt.

Um für den Bewuchs des Betonelementes nicht auf mehr oder weniger zufälligen Samen- und Sporenflug angewiesen zu sein, ist bei einer bevorzugten Weiterbildung der Erfindung vorgesehen, dass auf der Oberfläche der Wachstumssubstrat-Körner eine Moos- und/oder Flechten-Starterkultur fixiert ist. Mit dieser werden die Körner des Wachstumssubstrates, bevorzugt vor ihrer temporären Fixierung an der Matrize, belegt. Bspw. können die Wachstumssubstrat-Körner mit einer eine solche Starterkultur enthaltenden Flüssigkeit getränkt und im Anschluss getrocknet werden oder sie können durch Trommelbeschichtung mit den Sporen beimpft werden. Alternativ oder zusätzlich ist es auch möglich, erst das fertige Betonelement mit einer eine Starterkultur für Mose und/oder Flechten enthaltenden Flüssigkeit zu besprühen. Als wirksam hat sich eine im Mixer erzeugte Wasser-Moos-Slurry erwiesen. Bei dieser Ausführungsform werden die Wachstumssubstrat-Körner also erst nachträglich mit der Starterkultur getränkt. Andere, keine Wachstums-Beschichtung aufweisende Bereiche des Betonelementes, die dabei ebenfalls besprüht werden, werden aufgrund des fehlenden positiven Mikromilieus nicht von einem eventuellen Pflanzenwachstum betroffen sein. Bei allen vorgenannten Varianten bleibt das Pflanzenwachstum also auf die speziell ausgewählten und mit der erfindungsgemäßen Beschichtung versehen Bereiche beschränkt, sodass die Umsetzung im Rahmen nahezu beliebiger gestalterischer Konzepte möglich ist.

Wie eingangs erwähnt, werden durch die Matrizen vorgegebene Reliefstrukturen auf der Sichtfläche des erfindungsgemäßen Betonelementes erzeugt. Diese betreffen bevorzugt nicht allein die eigentlichen Beschichtungsbereiche. Bevorzugt ist vorgesehen, dass benachbart zu mit Wachstumssubstrat beschichteten Bereichen Verschattungsvorsprünge aus der Sichtfläche hervorragen bzw. mittels der eingesetzten Matrizen modelliert werden. Diese Verschattungsvorsprünge sind, wie der Fachmann leicht erkennen wird, an die Gegebenheiten des jeweiligen Aufstellungsortes des Betonelementes anzupassen. Hierbei ist insbesondere die Ausrichtung der Sichtfläche zur Sonneneinstrahlung am Aufstellungsort zu berücksichtigen.

Um eine hinreichende Wasserversorgung der in den Beschichtungsbereichen anwachsenden Moose und/oder Flechten zu gewährleisten, ist bei einer Weiterbildung der Erfindung ein vorzugsweise kantennah angeordneter, zur Sichtfläche hin offener Wasserleitkanal vorgesehen. "Zur Sichtfläche hin offen" ist hier weit zu verstehen und umfasst all solche Arten von Wasserleitkanälen, die eine Bewässerung der Sichtfläche, insbesondere der Beschichtungsbereiche ermöglichen. Es kann sich beispielsweise um in einer Oberkante des Betonelementes eingegrabene Rinnen mit einheitlicher Überlaufkante oder um geschlossene Kanäle mit verteilten Auslässen oder um ähnliche Wasserleitstrukturen handeln. Auch aus der Sichtfläche vorspringende Rinnen können Einsatz finden. Ziel dieser Maßnahme ist es, Wasser, insbesondere Regenwasser und/oder Leitungswasser, zu sammeln und gezielt zu den mit den Wachstumssubstrat-Körnern beschichteten Bereichen der Sichtfläche zu leiten.

Bei der Wahl des Zementes und der Zuschlagsstoffe ist der Fachmann im Rahmen der Anwendung der Erfindung nahezu keinen Einschränkungen unterworfen. Insbesondere hat sich herausgestellt, das auch bei Verwendung von hochalkalischen Zementen das von den Wachstumssubstrat-Körnern geschaffene Mikromilieu ausreicht, um das Wachstum einer "ersten Generation" von Moosen zu ermöglichen, die dann ihrerseits eine Substratbeschichtung darstellt, die weitere Anwachsungen ermöglicht und gegen eventuell mit der Zeit aus der Zementmatrix in die Beschichtung vordringende Alkalisierung isoliert. Gleichwohl wird der Fachmann nach Möglichkeit die Wahl von Betonarten mit möglichst niedrigem pH-Wert vorziehen.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine ausschnittsweise, schematische Darstellung eines erfindungsgemäßen Betonelementes,
- Figur 2:: eine schemtische Darstellungen alternativer Reliefstrukturen für ein Betonelement gemäß Figur 1 sowie
- Figur 3:: eine schematische Darstellung von mehreren Schritten des erfindungsgemäßen Verfahrens zur Herstellung eines Betonelementes gemäß Figur 1.

### Beschreibung bevorzugter Ausführungsformen

Gleiche Bezugszeichen in den Figuren deuten auf gleiche oder analoge Elemente hin.

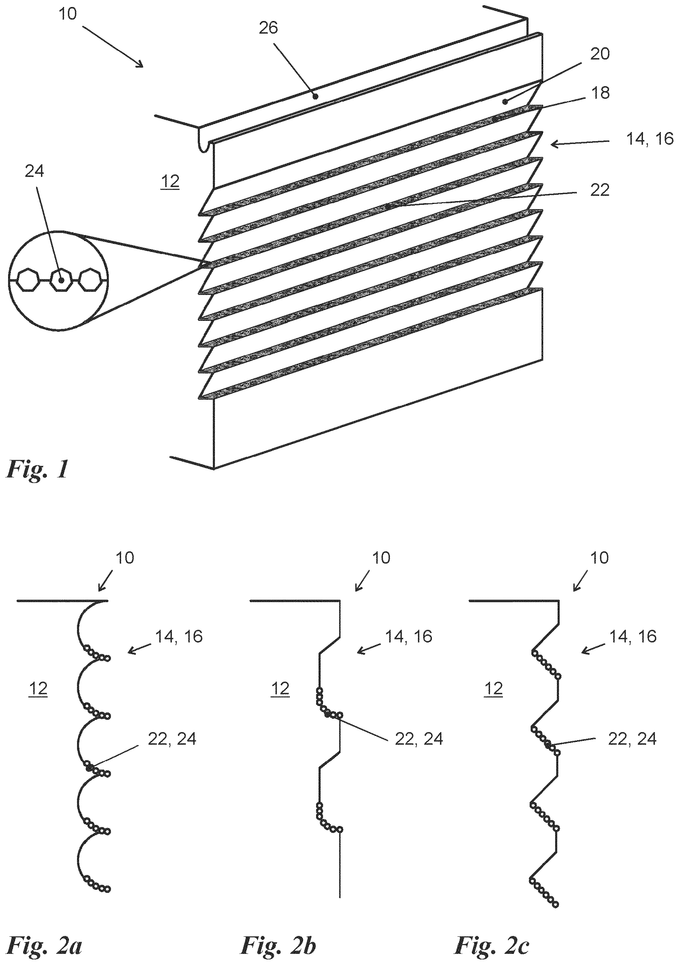

Figur 1 zeigt in einer ausschnittsweisen, stark schematisierten Darstellung eine beispielhafte Ausführungsform eines erfindungsgemäßen Betonelementes 10. Der Körper 12 des Betonelementes 10 unterscheidet sich nicht zwingend von herkömmlichen Betonelementen und kann mit denselben, breiten Parametervariationen wie diese gestaltet sein. Insbesondere spielt es im Rahmen der vorliegenden Erfindung keine Rolle, ob es sich um große, vor Ort gegossene Ortbeton-Elemente oder um als Fertigelemente an den Aufstellungsort transportierte Transportbeton-Elemente handelt. Auch die konkrete Bauchemie, d.h. die spezielle Wahl des Zementes und der Zuschlagstoffe sowie einer ggf. eingesetzten Armierung ist für die vorliegende Erfindung weitgehend ohne Belang.

Auf bzw. in seiner Sichtfläche 14 weist das Betonelement 10 eine Reliefstruktur 16 auf. Bei der gezeigten Ausführungsform ist diese Reliefstruktur 16 als im Wesentlichen horizontal erstreckte Stufen 18 mit jeweils schräg zurückversetzten Sockeln 20 ausgebildet. Figur 2 zeigt in ihren Teilfiguren a - c alternative Reliefstrukturen 16, die einzeln oder in Kombination mit den gezeigten oder anders gearteten Reliefstrukturen 16 in die Sichtfläche 14 des Betonelementes 10 eingearbeitet sein können. Der Fachmann wird erkennen, dass die hier dargestellten Formen rein beispielhafter Natur sind und im Einzelfall vom Fachmann an die designerischen und funktionalen Vorgaben des Einzelfalls angepasst werden können. Auch wird der Fachmann erkennen, dass nicht die gesamte Sichtfläche 16 des Betonelementes 10 mit der Reliefstruktur 16 versehen sein muss. Auch hier können aus designerischen und/oder funktionalen Gründen unterschiedliche Bereiche mit einer solchen Reliefstruktur 16 belegt bzw. frei von einer Reliefstruktur 16 sein.

Bei der in Figur 1 dargestellten Ausführungsform sind die waagerechten Stufenflächen mit einer erfindungsgemäßen Beschichtung 23 aus formschlüssig in die Zementmatrix des Betonelementes 10 eingebetteten Wachstumssubstrat-Körnern 24 beschichtet, wie dies in dem Vergrößerungsausschnitt links in Figur 1 schematisch angedeutet ist. Die Wachstumssubstrat-Körner 24, die beispielsweise aus porösen Mineralgesteinen bestehen, sind mit einer Starterkultur für Moose und/oder Flechten belegt.

Bei der dargestellten Ausführungsform ist an der Oberkante des Betonelementes 12 ein Wasserleitkanal 26 vorgesehen, dessen zur Sichtfläche 14 gewandte Vorderkante niedriger ist als seine rückwärtige Kante, sodass die Vorderkante als Überlauf für im Kanal 26 geleitetes Wasser dient. Der Wasserleitkanal 26 kann mit nicht dargestellten, weiteren Wasserleitstrukturen in Verbindung stehen, die der Verteilung von Regen- und/oder Leitungswasser dienen. Das überlaufende Wasser strömt die Sichtfläche 14 hinab und benetzt dabei die Beschichtung 22 in der Reliefstruktur 16. Hierdurch setzt die Keimung der Starterkultur auf den Wachstumssubstrat-Körnern 24 ein. Bereits angewachsene Moose und/oder Flechten werden auf diese Weise mit der notwendigen Feuchtigkeit versorgt. Zugleich dient die Reliefstruktur, bei der in Figur 1 gezeigten Ausführungsform insbesondere die Schrägen der Stufensockel 20, einer Beschattung der Beschichtung bzw. der dort angewachsenen Pflanzen. Eine solche Beschattung ist in den meisten Fällen erforderlich, um ein Austrocknen bzw. Verbrennen der Moose und/Flechten bei Sonneneinstrahlung zu verhindern. Die Gestaltung und Ausrichtung der entsprechenden Verschattungsstrukturen ist selbstverständlich an die Anforderungen des jeweiligen Standorts anzupassen.

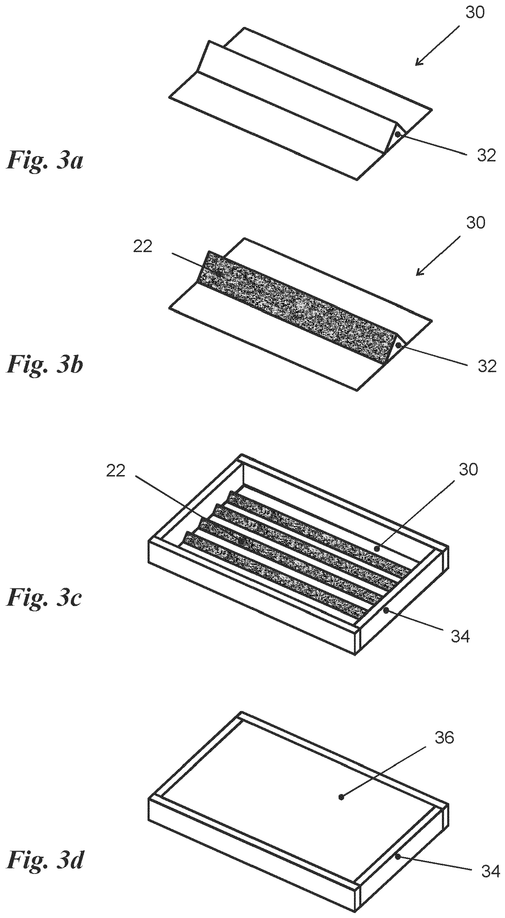

Figur 3 stellt in stark schematisierter Darstellung vier wichtige Verfahrensschritte des Verfahrens zur Herstellung eines erfindungsgemäßen Betonelementes 10 dar. Figur 3a zeigt ausschnittsweise eine sogenannte Matrize, die die Negativform 33 der im fertigen Betonelement 10 gewünschten Reliefstruktur 16 aufweist. Bevorzugt wird allgemein eine Negativform 32 ohne Hinterschnitte, sodass das spätere Abziehen der Matrize 30 vom fertigen Betonelement 10 ohne deren Zerstörung erfolgen kann. Die Matrize ist dann vorzugsweise für die Herstellung weiterer Betonelemente 10 wiederverwendbar.

Wie in Figur 3b angedeutet, wird sodann die Negativform 32 wenigstens bereichsweise mit einer Beschichtung 22 aus Wachstumssubstrat-Körnern 24 versehen. Hierzu wird auf die gewünschten Stellen der Matrize 30 in dünner Schicht ein Adhäsiv aufgetragen, mittels dessen die Wachstumssubstrat-Körner 24 mit der Matrize 30, insbesondere der Negativform 32, verklebt werden. Hierbei kann es sich um Harze oder sogenannte Waschlacke handeln, die im Kontaktbereich eine Verzögerung des Erhärtens der obersten Zementschicht in einem späteren Verfahrensschritt bewirken. Zum Verkleben kann gekörntes Wachstumssubstrat auf das noch feuchte Adhäsiv aufgestreut werden. Überschüssiges Wachstumssubstrat kann nach dem Erhärten des Adhäsives abgeblasen werden.

Die so vorbereitete Matrize 30 wird alsdann in eine Schalung 34 eingelegt und zwar an derjenigen Schalungswand, die der späteren Sichtfläche 14 des Betonelementes 10 entspricht. Der Fachmann wird erkennen, dass es selbstverständlich auch möglich ist, die Beschichtung der Matrize 30 mit dem Wachstumssubstrat nicht vorbereitend, sondern nach Einlegen in die Schalung 34 vorzunehmen.

Wie in Figur 3d gezeigt, wird alsdann die Schalung 34 mit gießfähiger Betonmasse 36 ausgegossen. Dabei umfließt der flüssige Zement in nicht eigens dargestellter Weise die mit der Matrize 30 verklebten Wachstumssubstrat-Körner 24. Beim Erhärten des Zementes entsteht so eine formschlüssige Verbindung zwischen den Wachstumssubstrat-Körnern 24 und der Zementmatrix.

Im Anschluss wird in üblicher, nicht dargestellter Weise das erhärtete Betonelement 10 ausgeschalt und die Matrize 30 vorzugsweise zerstörungsfrei abgezogen. Da die formschlüssige Fixierung der Wachstumssubstrat-Körner 24 in der erhärteten Zementmatrix deutlich stärker ist als ihre materialschlüssige Fixierung an der Negativform 32 der Matrize 30 ist, lösen sich die Körner 24 dabei von der Matrize und verbleiben als Beschichtung 22 am Betonelement 10, wobei sie dessen Oberfläche nach außen durchragen. Der die Oberfläche durchragende Teil der Körner 24 kann durch geeignete Nachbearbeitung der Sichtfläche 14 des Betonelementes 10 noch gesteigert werden. Dies kann mittels eines Hochdruck-Wasserstrahls, durch Absäuern oder auf andere, dem Fachmann bekannte Weisen erfolgen. Insbesondere im Fall, dass das zur Fixierung der Wachstumssubstrat-Körner 24 an der Matrize 30 verwendete Adhäsiv die Erhärtung des Zementes verzögernde Substanzen enthält, kann die entsprechend nicht erhärtete Oberflächenschicht auf einfache Weise ausgewaschen werden. Selbstverständlich ist dabei darauf zu achten, dass der Formschluss der Wachstumssubstrat-Körner 24 in der Betonmatrix nicht vollständig verloren geht.

In Figur 3 nicht dargestellt ist der Schritt des Belegens der Wachstumssubstrat-Körner 24 mit einer Starterkultur für Moose und/oder Flechten. Dies kann, beispielsweise durch Besprühen oder Tränken der Körner 24 im Grunde zu jedem beliebigen Zeitpunkt, zu denen die Körner für eine solche Behandlung zugänglich sind, erfolgen, bevorzugt bereits vor ihrer Fixierung an der Matrix 30, möglicherweise jedoch auch erst im fertigen Betonelement 10.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 10: Betonelement
- 12: Körper von 10
- 14: Sichtfläche von 10
- 16: Reliefstruktur
- 18: Stufe
- 20: Sockel
- 22: Beschichtung
- 24: Wachstumssubstrat-Korn
- 26: Wasserleitkanal
- 30: Matrize
- 32: Negativform
- 34: Schalung
- 36: Beton

## Patentansprüche

1. Betonelement (10), umfassend eine mit Zuschlagstoffen versetzte Zementmatrix mit reliefartig strukturierter Sichtfläche (14), auf der oberflächennah und mit Umgebungskontakt ein eine Anwachsung von Kryptogamen beförderndes Wachstumssubstrat (24) gehaltert ist,
**dadurch gekennzeichnet,**
**dass** das Wachstumssubstrat (24) als eine gekörnte, formschlüssig in der Oberfläche der Zementmatrix fixierte Beschichtung (22) ausgebildet ist.

2. Betonelement (10) nach Anspruch 1,
**dadurch gekennzeichnet,**
**dass** das Wachstumssubstrat (24) Körner aus offenporigem Gestein umfasst.

3. Betonelement (10) nach einem der vorangehenden Ansprüche,
**dadurch gekennzeichnet,**
**dass** das Wachstumssubstrat (24) Körner aus Netzstrukturelementen umfasst, die von einer erhärteten, mineralischen Schlämme getränkt sind.

4. Betonelement (10) nach einem der vorangehenden Ansprüche,
**dadurch gekennzeichnet,**
**dass** die Korngröße der Wachstumssubstrat-Körner (24) kleiner als 6 mm ist.

5. Betonelement (10) nach einem der vorangehenden Ansprüche,
**dadurch gekennzeichnet,**
**dass** auf der Oberfläche der Wachstumssubstrat-Körner (24) eine Moos- und/der Flechten-Starterkultur fixiert ist.

6. Betonelement (10) nach einem der vorangehenden Ansprüche,
**dadurch gekennzeichnet,**
**dass** benachbart zu mit Wachstumssubstrat (24) beschichteten Bereichen Verschattungsvorsprünge (20) aus der Sichtfläche (14) hervorragen.

7. Betonelement (10) nach einem der vorangehenden Ansprüche,
**gekennzeichnet durch**
einen zur Sichtfläche (14) hin offenen Wasserleitkanal (26).

8. Verfahren zum Herstellen eines Betonelementes (10), insbesondere nach einem der vorangehenden Ansprüche, umfassend die Schritte:
a) Bereitstellen einer Schalung (34) zur Vorgabe der Außenform des Betonelementes (10),
b) Auskleiden der Schalung (10) mit einer Matrize (30) an der der späteren Sichtfläche (14) des Betonelementes (10) entsprechenden Schalungswand zur Vorgabe einer reliefartigen Struktur der Sichtfläche (14),
c) Füllen der Schalung (34) mit einer gießfähigen Mischung aus Zement und Zuschlagsstoffen,
d) Erhärten-Lassen des Zementes, Ausschalen des resultierenden Grünlings und Abziehen der Matrize (30),
**dadurch gekennzeichnet,**
**dass** vor Schritt c Körner eines Wachstumssubstrates (24) mittels eines Adhäsives bereichsweise innenseitig auf der Matrize (30) temporär fixiert und in Schritt c von dem Zement umflossen werden, sodass in Schritt d die in dem erhärteten Zement oberflächennah, formschlüssig fixierten Wachstumssubstrat-Körner (24) beim Abziehen der Matrize (30) von dieser abgelöst werden.

9. Verfahren nach Anspruch 8,
**gekennzeichnet durch** den zusätzlichen Schritt,
e) Nachbehandeln der Sichtfläche des Betonelementes (10) zur Freilegung der äußeren Bereiche der fixierten Wachstumssubstrat-Körner (24).

10. Verfahren nach einem der Ansprüche 8 bis 9,
**dadurch gekennzeichnet,**
**dass** das Adhäsiv eine Substanz aufweist, die in ihrem Kontaktbereich zu dem Zement dessen Erhärten verzögert.

11. Verfahren nach einem der Ansprüche 8 bis 10,
**dadurch gekennzeichnet,**
**dass** die Körner des Wachstumssubstrates (24) vor ihrer temporären Fixierung an der Matrize (30) mit einer Starterkultur für Moose und/oder Flechten belegt werden.

12. Verfahren nach einem der Ansprüche 8 bis 11,
**dadurch gekennzeichnet,**
**dass** die Körner des Wachstumssubstrates (30) nach Schritt d oder, sofern durchgeführt, nach Schritt e mit einer eine Starterkultur für Moose und/oder Flechten enthaltenden Flüssigkeit besprüht werden.

## Claims

1. Concrete element (10) comprising a cement matrix mixed with aggregates and having a visible surface (14) structured in relief, on which a growth substrate (24) promoting the growth of cryptogams is supported close to the surface and in contact with the environment,
**characterised in that**
**in that** the growth substrate (24) is formed as a granular coating (22) which is positively fixed in the surface of the cement matrix.

2. Concrete element (10) according to claim 1,
**characterized in that**
the growth substrate (24) comprises grains of open-pored rock.

3. Concrete element (10) according to any one of the preceding claims,
**characterised in that**
the growth substrate (24) comprises grains of net structural elements impregnated by a hardened mineral slurry.

4. Concrete element (10) according to any one of the preceding claims,
**characterized in that**
the grain size of the growth substrate grains (24) is smaller than 6 mm.

5. Concrete element (10) according to any one of the preceding claims,
**characterized in that**
a moss and/or lichen starter culture is fixed on the surface of the growth substrate grains (24).

6. Concrete element (10) according to any one of the preceding claims,
**characterized in that**
shading projections (20) protrude from the visible surface (14) adjacent to areas coated with growth substrate (24).

7. Concrete element (10) according to any one of the preceding claims,
**characterised by**
a water guide channel (26) open towards the visible surface (14).

8. A method of manufacturing a concrete element (10), in particular according to any one of the preceding claims, comprising the steps of:
a) Providing a formwork (34) for presetting the outer shape of the concrete element (10),
b) lining the formwork (10) with a matrix (30) on the formwork wall corresponding to the later visible surface (14) of the concrete element (10) in order to specify a relief-like structure of the visible surface (14),
c) Filling the formwork (34) with a pourable mixture of cement and aggregates,
d) Allowing the cement to set, stripping the resulting green body and removing the matrix (30),
**characterised in that**
**in that**, before step c, grains of a growth substrate (24) are temporarily fixed in regions on the inside of the matrix (30) by means of an adhesive and, in step c, the cement flows around them, so that, in step d, the growth substrate grains (24), which are fixed in a form-fitting manner close to the surface in the hardened cement, are detached from the matrix (30) when the latter is pulled off.

9. Method according to claim 8,
**characterised by** the additional step,
e) post-treating the visible surface of the concrete element (10) to expose the outer areas of the fixed growth substrate grains (24).

10. A method according to any one of claims 8 to 9,
**characterized in that**
the adhesive comprises a substance which, in its region of contact with the cement, retards its setting.

11. Method according to any one of the claims 8 to 10,
**characterized in that**
the grains of the growth substrate (24) are coated with a starter culture for mosses and/or lichens prior to their temporary fixation to the matrix (30).

12. Method according to any one of claims 8 to 11,
**characterized in that**
the grains of the growth substrate (30) are sprayed with a liquid containing a starter culture for mosses and/or lichens after step d or, if carried out, after step e.

## Revendications

1. Elément en béton (10), comprenant une matrice de ciment mélangée à des agrégats et présentant une surface visible (14) structurée en relief, sur laquelle est maintenu, à proximité de la surface et en contact avec l'environnement, un substrat de croissance (24) favorisant la croissance de cryptogames,
**caractérisé en**
**ce que** le substrat de croissance (24) est réalisé sous la forme d'un revêtement (22) granulé, fixé par complémentarité de forme dans la surface de la matrice de ciment.

2. Elément en béton (10) selon la revendication 1,
**caractérisé en**
**ce que** le substrat de croissance (24) comprend des grains de roche à pores ouverts.

3. Elément en béton (10) selon l'une quelconque des revendications précédentes,
**caractérisé en**
**ce que** le substrat de croissance (24) comprend des grains d'éléments de structure réticulée imprégnés d'un coulis minéral durci.

4. Elément en béton (10) selon l'une quelconque des revendications précédentes,
**caractérisé en**
**ce que** la taille des grains du substrat de croissance (24) est inférieure à 6 mm.

5. Elément en béton (10) selon l'une quelconque des revendications précédentes,
**caractérisé en ce**
**qu'**une culture de démarrage de mousse et/ou de lichen est fixée sur la surface des grains de substrat de croissance (24).

6. Elément en béton (10) selon l'une quelconque des revendications précédentes,
**caractérisé en**
**ce que** des saillies d'ombrage (20) dépassent de la surface visible (14) au voisinage de zones revêtues de substrat de croissance (24).

7. Elément en béton (10) selon l'une quelconque des revendications précédentes,
**caractérisé par**
un canal de guidage d'eau (26) ouvert vers la surface visible (14).

8. Procédé de fabrication d'un élément en béton (10), notamment selon l'une des revendications précédentes, comprenant les étapes suivantes :
a) mise à disposition d'un coffrage (34) pour prédéfinir la forme extérieure de l'élément en béton (10),
b) revêtir le coffrage (10) d'une matrice (30) sur la paroi du coffrage correspondant à la future surface visible (14) de l'élément en béton (10) pour prédéfinir une structure en relief de la surface visible (14),
c) remplir le coffrage (34) d'un mélange de ciment et d'agrégats apte à être coulé,
d) laisser le ciment durcir, décoffrer la pièce crue résultante et retirer la matrice (30),
**caractérisé en**
**ce qu'**avant l'étape c, des grains d'un substrat de croissance (24) sont fixés temporairement par zones sur le côté intérieur de la matrice (30) au moyen d'un adhésif et sont entourés par le ciment à l'étape c, de sorte qu'à l'étape d, les grains du substrat de croissance (24) fixés par complémentarité de forme à proximité de la surface dans le ciment durci sont détachés de la matrice (30) lors du retrait de celle-ci.

9. Procédé selon la revendication 8,
**caractérisé par** l'étape supplémentaire,
e) post-traitement de la surface visible de l'élément en béton (10) pour exposer les zones extérieures des grains de substrat de croissance fixés (24).

10. Procédé selon l'une quelconque des revendications 8 à 9,
**caractérisé en**
**ce que** l'adhésif comprend une substance qui, dans sa zone de contact avec le ciment, retarde le durcissement de celui-ci.

11. Procédé selon l'une quelconque des revendications 8 à 10,
**caractérisé en**
**ce que** les grains du substrat de croissance (24) sont recouverts d'une culture de démarrage de mousses et/ou de lichens avant leur fixation temporaire sur la matrice (30).

12. Procédé selon l'une quelconque des revendications 8 à 11,
**caractérisé en**
**ce que**, après l'étape d ou, si elle est réalisée, après l'étape e, les grains du substrat de croissance (30) sont aspergés d'un liquide contenant une culture de démarrage pour mousses et/ou lichens.
